# EUROPEAN PATENT SPECIFICATION

(11) **EP 3 461 226 B1**
(45) Date of publication and mention of the grant of the patent: **27.07.2022**
(21) Application number: 16901967.6
(22) Date of filing: 17.05.2016
(51) Int. Cl.: H04L 61/5014, H04W 88/16, H04L 61/2514

(54) **HOME GATEWAY AND FORWARDING SERVICE METHOD THEREOF**
HOME-GATEWAY UND WEITERLEITUNGSDIENSTVERFAHREN DAFÜR
PASSERELLE RÉSIDENTIELLE ET PROCÉDÉ DE SERVICE DE TRANSFERT ASSOCIÉ

(43) Date of publication of application: 27.03.2019
(73) Proprietor: Huawei Technologies Co., Ltd., Longgang District Shenzhen, Guangdong 518129 (CN)
(72) Inventor: SONG, Xianhui, Shenzhen Guangdong 518129 (CN); ZHANG, Lei, Shenzhen Guangdong 518129 (CN); HE, Haoran, Shenzhen Guangdong 518129 (CN)
(74) Representative: Gill Jennings & Every LLP
(86) International application number: PCT/CN2016/082374
(87) International publication number: WO 2017/197582

(56) References cited:
- EP-A1- 1 892 883
- CN-A- 102 316 453
- CN-A- 102 480 476
- CN-A- 104 994 113
- US-A1- 2006 280 189
- US-A1- 2012 011 230
- US-A1- 2015 103 693
- US-A1- 2015 215 430
- US-A1- 2015 244 560
- US-A1- 2016 094 488

## Description

### TECHNICAL FIELD

The present invention relates to the communications field, and in particular, to a residential gateway and a service forwarding method for a residential gateway.

### BACKGROUND

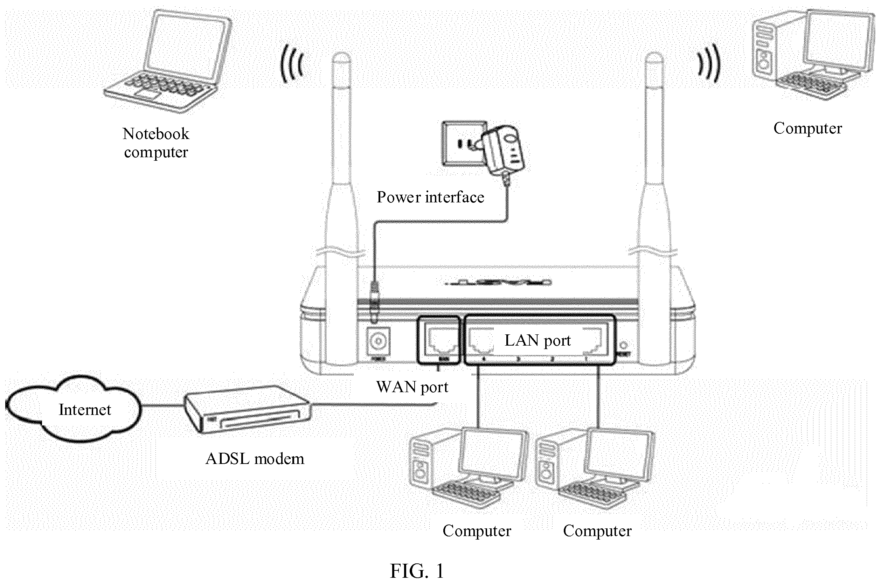

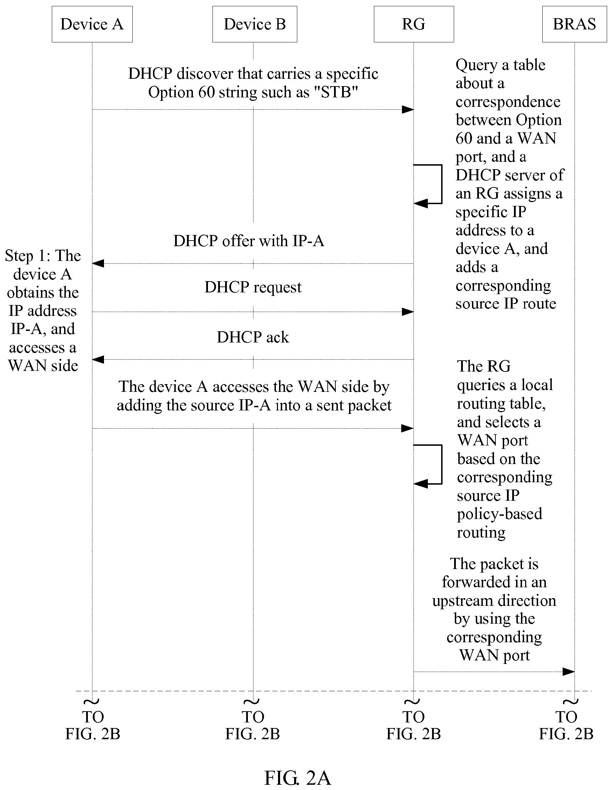

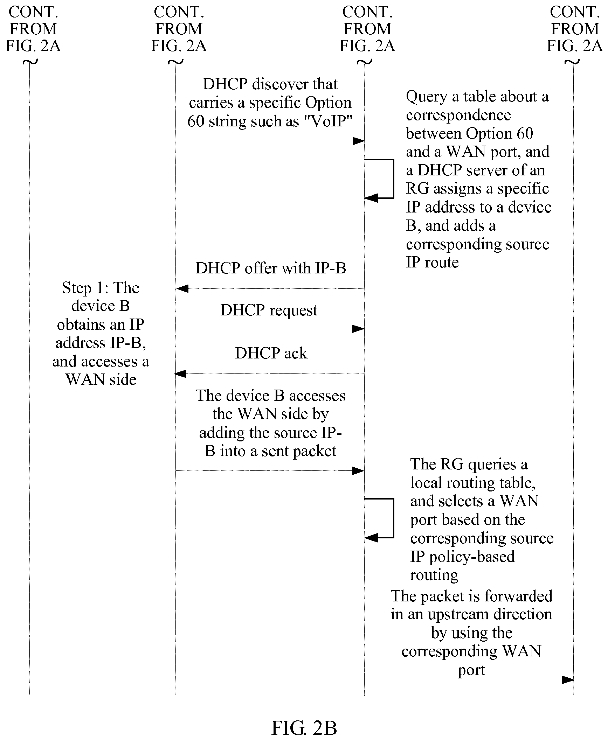

As shown in FIG. 1, a residential gateway (Residential Gateway, RG) includes a plurality of wide area network (Wide Area Network, WAN) ports and a plurality of local area network (Local Area Network, LAN) ports. Different WAN ports usually represent different services, such as IPTV (Internet Protocol Television, Internet Protocol television), HSI (High Speed Internet, high speed Internet), and VoIP (Voice over Internet Protocol, Voice over Internet Protocol). Different devices may be connected to different LAN ports. To ensure that a data flow of each of the devices can be sent from a corresponding WAN port for normal execution of a corresponding service, there are two solutions currently. One solution is a LAN&WAN binding solution (or referred to as port binding) in which a LAN-side device needs to be connected to a specific LAN port to normally access a WAN side service. The other solution is an any port any service (Any Port Any Service, APAS) solution. As shown in FIG. 2A and FIG. 2B, a common manner is as follows: Each of the devices connected to the LAN ports obtains an IP (Internet Protocol, Internet Protocol) address by using the Dynamic Host Configuration Protocol (Dynamic Host Configuration Protocol, DHCP), and adds, into a packet, a DHCP Option field related to a service type. The RG identifies the DHCP Option fields of these devices, to assign a specific segment of private IP addresses to each of these devices, and distinguishes between these different segments of private IP addresses, to configure source IP policy-based routing and select a routed WAN port. Because only the routed WAN port can be selected, an application scenario is limited.

US20150103693A1 discloses a device for processing information intended to be used as a gateway between a local area communications network and a wide area communications network which comprises a plurality of physical ports for connecting equipment of the local area network, a physical port connected to the wide area communications network, a router for routing the data streams between these various ports, and a direct circuit management module for managing a layer-2 direct circuit between the physical port connected to the wide area communications network and one of the physical ports for connecting equipment of the local area network.

### SUMMARY

In accordance with the invention, there is provided a service forwarding method and a residential gateway as set forth in the claims. The invention is defined by the appended set of claims.

Embodiments of the present invention provide a residential gateway and a service forwarding method for a residential gateway, so that residential gateway can flexibly select a routed WAN port or a bridged WAN port.

According to a first aspect, an embodiment of the present invention provides a service forwarding method for a residential gateway. The method includes: receiving, by the residential gateway, a DHCP discover packet that includes a service request and that is sent by a LAN-side device, where the DHCP discover packet includes a DHCP Option field, the DHCP Option field includes a value, and the value identifies a requested service; then selecting, by the residential gateway, a corresponding routed WAN port or bridged WAN port based on a correspondence between the service identified by the value and a routed WAN port or a bridged WAN port; and finally establishing, by the residential gateway, a link to a broadband access server by using the selected routed WAN port or bridged WAN port.

In a possible design, the selecting a corresponding routed WAN port or bridged WAN port based on a correspondence between the service identified by the value and a routed WAN port or a bridged WAN port includes: if the service identified by the value is corresponding to a bridged WAN port, forwarding, by the residential gateway, the DHCP discover packet from the bridged WAN port to the broadband access server, receiving, by the residential gateway, a DHCP Offer response packet returned by the broadband access server, and recording a binding relationship between a source MAC address of the LAN-side device and a bridged WAN port; finding, by the residential gateway, a corresponding LAN port based on the binding relationship between the source MAC address of the LAN-side device and the bridged WAN port, and sending the DHCP Offer response packet to the LAN-side device by using the LAN port; and receiving, by the residential gateway, a DHCP request packet sent by the LAN-side device, and finding, by the residential gateway, a corresponding bridged WAN port based on the binding relationship between the source MAC address of the LAN-side device and the bridged WAN port.

In a possible design, the establishing a link to a broadband access server by using the selected routed WAN port or bridged WAN port includes: sending the DHCP request packet to the broadband access server by using the bridged WAN port, and receiving a DHCP acknowledgement packet returned by the broadband access server; sending, by the residential gateway, the DHCP acknowledgement packet to the LAN-side device by using the LAN port; and if the LAN-side device determines, through check, that a public IP address assigned by a DHCP server can be used, connecting, by the LAN-side device, to the broadband access server based on the public IP address by using the corresponding bridged WAN port.

In a possible design, the selecting a corresponding routed WAN port or bridged WAN port based on a correspondence between the service identified by the value and a routed WAN port or a bridged WAN port includes: if the service identified by the value is corresponding to a routed WAN port, assigning, by the residential gateway, a private IP address to the LAN-side device, and accessing, by the LAN-side device, the residential gateway based on the IP address.

In a possible design, the establishing a link to a broadband access server by using the selected routed WAN port or bridged WAN port includes: querying, by the residential gateway, a local routing table, and selecting a corresponding routed WAN port based on source IP policy-based routing; and connecting, by the LAN-side device, to the broadband access server by using the corresponding routed WAN port.

In a possible design, the value of the DHCP Option field is a value of a DHCP Option 60 field.

According to another aspect, an embodiment of the present invention provides a residential gateway. The residential gateway includes: a LAN port, a routed WAN port, a DHCP server, and a bridged WAN port, where a LAN-side device is connected to the residential gateway by using the LAN port; and the residential gateway receives a DHCP discover packet that includes a service request and that is sent by the LAN-side device, where the DHCP discover packet includes a DHCP Option field, the DHCP Option field includes a value, and the value identifies a requested service; selects a corresponding routed WAN port or bridged WAN port based on a correspondence between the service identified by the value and a routed WAN port or a bridged WAN port; and establishes a link to a broadband access server by using the selected routed WAN port or bridged WAN port.

In a possible design, if the service identified by the value is corresponding to a bridged WAN port, the residential gateway forwards the DHCP discover packet from the bridged WAN port to the broadband access server, and the residential gateway receives a DHCP Offer response packet returned by the broadband access server, and records a binding relationship between a source MAC address of the LAN-side device and a bridged WAN port; the residential gateway finds a corresponding LAN port based on the binding relationship between the source MAC address of the LAN-side device and the bridged WAN port, and sends the DHCP Offer response packet to the LAN-side device by using the LAN port; and the residential gateway receives a DHCP request packet sent by the LAN-side device, and the residential gateway finds a corresponding bridged WAN port based on the binding relationship between the source MAC address of the LAN-side device and the bridged WAN port.

In a possible design, the residential gateway sends the DHCP request packet to the broadband access server by using the bridged WAN port, and receives a DHCP acknowledgement packet returned by the broadband access server; the residential gateway sends the DHCP acknowledgement packet to the LAN-side device by using the LAN port; and if the LAN-side device determines, through check, that a public IP address assigned by a DHCP server can be used, the LAN-side device is connected to the broadband access server based on the public IP address by using the corresponding bridged WAN port.

In a possible design, if the service identified by the value is corresponding to a routed WAN port, the residential gateway assigns a private IP address to the LAN-side device, and the LAN-side device accesses the residential gateway based on the IP address.

In a possible design, the residential gateway queries a local routing table, and selects a corresponding routed WAN port based on source IP policy-based routing; and the LAN-side device is connected to the broadband access server by using the corresponding routed WAN port.

In a possible design, the value of the DHCP Option field is a value of a DHCP Option 60 field.

According to still another aspect, an embodiment of the present invention provides a communications apparatus. The communications apparatus includes a processor, a memory, and a bus system, where the processor and the memory are connected to each other by using the bus system, the memory is configured to store an instruction, and the processor is configured to execute the instruction stored in the memory.

The processor is configured to: receive a DHCP discover packet that includes a service request and that is sent by a LAN-side device, where the DHCP discover packet includes a DHCP Option field, the DHCP Option field includes a value, and the value identifies a requested service; select a corresponding routed WAN port or bridged WAN port based on a correspondence between the service identified by the value and a routed WAN port or a bridged WAN port; and establish a link to a broadband access server by using the selected routed WAN port or bridged WAN port.

In a possible design, the processor is specifically configured to: if the service identified by the value is corresponding to a bridged WAN port, forward the DHCP discover packet from the bridged WAN port to the broadband access server, receive a DHCP Offer response packet returned by the broadband access server, and record a binding relationship between a source MAC address of the LAN-side device and a bridged WAN port; find a corresponding LAN port based on the binding relationship between the source MAC address of the LAN-side device and the bridged WAN port, and send the DHCP Offer response packet to the LAN-side device by using the LAN port; and receive a DHCP request packet sent by the LAN-side device, and find a corresponding bridged WAN port based on the binding relationship between the source MAC address of the LAN-side device and the bridged WAN port.

In a possible design, the processor is specifically configured to: send the DHCP request packet to the broadband access server by using the bridged WAN port, and receive a DHCP acknowledgement packet returned by the broadband access server; and send the DHCP acknowledgement packet to the LAN-side device by using the LAN port, so that if the LAN-side device determines, through check, that a public IP address assigned by a DHCP server can be used, the LAN-side device is connected to the broadband access server based on the public IP address by using the corresponding bridged WAN port.

In a possible design, the processor is specifically configured to: if the service identified by the value is corresponding to a routed WAN port, assign a private IP address to the LAN-side device, so that the LAN-side device accesses the residential gateway based on the IP address.

In a possible design, the processor is specifically configured to: query a local routing table, and select a corresponding routed WAN port based on source IP policy-based routing, so that the LAN-side device is connected to the broadband access server by using the corresponding routed WAN port.

In a possible design, the value of the DHCP Option field is a value of a DHCP Option 60 field.

According to the technical solutions provided in the embodiments of the present invention, the DHCP Option field is used to determine whether the LAN-side device is to be connected to a routed WAN port or a bridged WAN port, so that residential gateway can flexibly select a routed WAN port or a bridged WAN port, for flexible service deployment.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show only some embodiments of the present invention, and a person of ordinary skill in the art may derive other drawings from these accompanying drawings without creative efforts.
FIG. 1 is a schematic diagram of a residential gateway according to an embodiment of the present invention;
FIG. 2A and FIG. 2B are a flowchart of an any port any service (any port any service, APAS) solution in the prior art;
FIG. 3 is a flowchart of a service forwarding method for a residential gateway according to an embodiment of the present invention;
FIG. 4A and FIG. 4B are a flowchart of a service forwarding method for a residential gateway according to an embodiment of the present invention;
FIG. 5 is a diagram of an application scenario of a LAN-side device according to an embodiment of the present invention; and
FIG. 6 is a schematic diagram of a communications apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention, provided that they fall within the scope of the appended claims.

In the prior art, when a LAN-side device obtains an IP address by using the Dynamic Host Configuration Protocol (Dynamic Host Configuration Protocol, DHCP), a home gateway can select only a routed WAN port, and consequently an application scenario is limited. To resolve the problem, the embodiments of the present invention provide a solution based on a communications system shown in FIG. 1: A DHCP Option field is used to distinguish between WAN ports to which the LAN-side device needs to be connected, so that the residential gateway can flexibly select a routed WAN port or a bridged WAN port.

In the embodiments, the residential gateway may be a wireless router gateway, a digital set top box gateway, a PC residential gateway, a digital subscriber line (DSL) router gateway, a VoIP broadband access gateway, or a wired multimedia gateway. The LAN-side device includes but is not limited to a handheld device, an in-vehicle device, a wearable device, a computing device, a terminal (terminal), or a terminal device (terminal device), and may further include a subscriber unit (subscriber unit), a cellular phone (cellular phone), a smartphone (smartphone), a wireless data card, a personal digital assistant (personal digital assistant, PDA), a tablet computer, a wireless modem (modem), a handheld (handheld) device, a laptop computer (laptop computer), a cordless phone (cordless phone) or a wireless local loop (wireless local loop, WLL) station, a machine type communication (machine type communication, MTC) terminal, and the like.

As shown in FIG. 1, the present invention discloses a residential gateway. The residential gateway includes both a LAN port and a WAN port. There are two types of WAN ports: a routed WAN port and a bridged WAN port. A quantity of routed WAN ports and a quantity of bridged WAN ports are determined based on an actual requirement. For the routed WAN port, the residential gateway has a corresponding DHCP server. For the bridged WAN port, a DHCP server is independent of the home gateway, and the residential gateway has no corresponding DHCP server. A LAN-side device is connected to the residential gateway by using the LAN port. The residential gateway receives a DHCP discover packet that includes a service request and that is sent by the LAN-side device, where the DHCP discover packet includes a DHCP Option field, the DHCP Option field includes a value, and the value identifies a requested service; selects a corresponding routed WAN port or bridged WAN port based on a correspondence between the service identified by the value and a routed WAN port or a bridged WAN port; and establishes a link to a broadband access server (BAS, Broadband Access Server) by using the selected routed WAN port or bridged WAN port.

It should be noted that, for the DHCP discover packet, each DHCP discover packet includes any quantity of DHCP Option fields, that is, may include one or more DHCP Option fields, for example, a DHCP Option 60 field, a DHCP Option 77 field, a DHCP Option 15 field, and a DHCP Option 16 field. Preferably, the DHCP Option 60 field is designated in this embodiment of the present invention; that is, a value of the DHCP Option 60 field is selected to identify a service requested by the LAN-side device. The residential gateway selects a corresponding routed WAN port or bridged WAN port based on a correspondence between the service identified by the value of the DHCP Option 60 field and a routed WAN port or a bridged WAN port, and then the residential gateway establishes a link to the broadband access server by using the selected routed WAN port or bridged WAN port. The LAN-side device is connected to the broadband access server to perform service interaction.

Service types include VoIP, Video On Demand, Internet Protocol television, high speed Internet, and the like.

For the residential gateway disclosed in FIG. 1, a scenario is as follows: If the service identified by the value is corresponding to a bridged WAN port, the residential gateway forwards the DHCP discover (DHCP discover) packet from the bridged WAN port to the broadband access server, and the residential gateway receives a DHCP Offer response packet returned by the broadband access server, and records a binding relationship between a source MAC address of the LAN-side device and a bridged WAN port. The residential gateway finds a corresponding LAN port based on the binding relationship between the source MAC address of the LAN-side device and the bridged WAN port, and sends the DHCP Offer response packet to the LAN-side device by using the LAN port. The residential gateway receives a DHCP request (DHCP request) packet sent by the LAN-side device, and the residential gateway finds a corresponding bridged WAN port based on the binding relationship between the source MAC address of the LAN-side device and the bridged WAN port. Further, the residential gateway sends the DHCP request packet to the broadband access server by using the bridged WAN port, and receives a DHCP acknowledgement (DHCP ack) packet returned by the broadband access server. The residential gateway sends the DHCP acknowledgement packet to the LAN-side device by using the LAN port. If the LAN-side device determines, through check, that a public IP address assigned by a DHCP server (DHCP server) can be used, the LAN-side device is connected to the broadband access server based on the public IP address by using the corresponding bridged WAN port.

Another scenario is as follows: If the service identified by the value of the DHCP Option field is corresponding to a routed WAN port, the residential gateway assigns a private IP address to the LAN-side device, and the LAN-side device accesses the residential gateway based on the IP address. Then, the residential gateway queries a local routing table, and selects a corresponding routed WAN port based on source IP policy-based routing; and the LAN-side device is connected to the broadband access server by using the corresponding routed WAN port.

In this embodiment of the present invention, the DHCP Option field is used to determine whether the LAN-side device is to be connected to a routed WAN port or a bridged WAN port, so that the residential gateway can flexibly select a routed WAN port or a bridged WAN port, to flexibly perform service deployment.

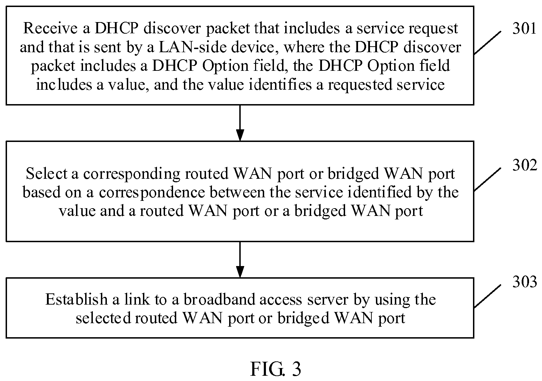

As shown in FIG. 3, for the residential gateway shown in FIG. 1, an embodiment of the present invention provides a service forwarding method. The method includes the following steps:

Step 301: A residential gateway receives a DHCP discover packet that includes a service request and that is sent by a LAN-side device, where the DHCP discover packet includes a DHCP Option field, the DHCP Option field includes a value, and the value identifies a requested service.

Step 302: The residential gateway selects a corresponding routed WAN port or bridged WAN port based on a correspondence between the service identified by the value and a routed WAN port or a bridged WAN port.

A DHCP Option 60 field is used as an example. A manner is as follows: If the DHCP discover packet carries a DHCP Option 60 string such as "STB", the residential gateway searches a service relational database corresponding to different values of strings, to learn that "STB" represents a Video On Demand service, and the residential gateway selects a routed WAN port based on a correspondence between a Video On Demand service and a routed WAN port or a bridged WAN port. The LAN-side device is connected to a broadband access server by using the routed WAN port. Another manner is as follows: If the DHCP discover packet carries a DHCP Option 60 string such as "VoIP", the residential gateway searches a service relational database corresponding to different values of strings, to learn that "VoIP" represents a VoIP service; and the residential gateway selects a bridged WAN port based on a correspondence between a VoIP service and a routed WAN port or a bridged WAN port.

Step 303: The residential gateway establishes a link to a broadband access server by using the selected routed WAN port or bridged WAN port.

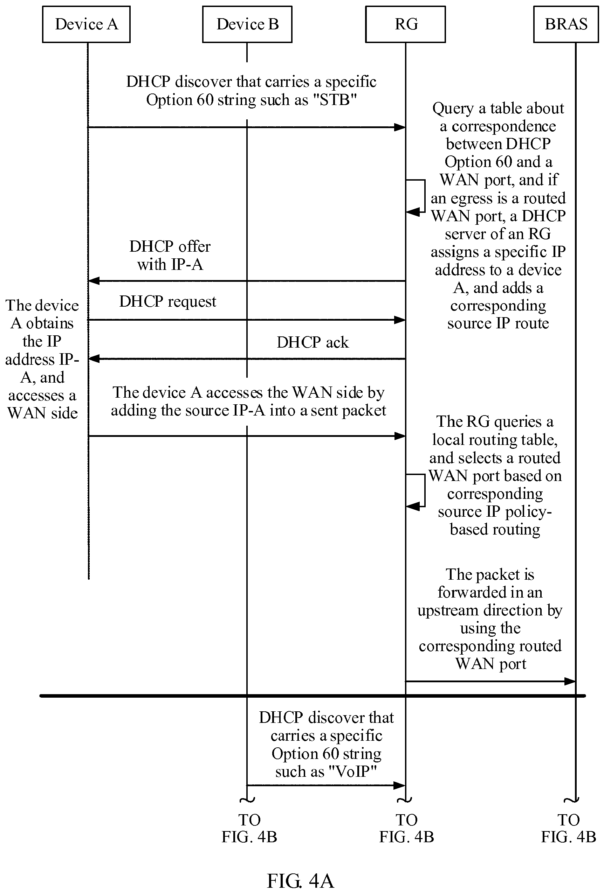

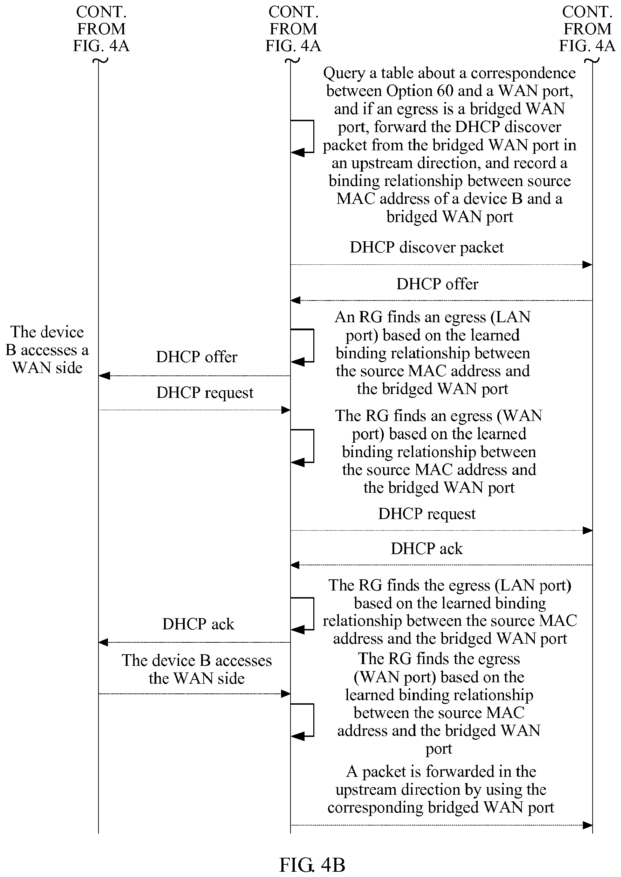

As shown in FIG. 4A and FIG. 4B, description is provided by using an example in which two LAN-side devices, a device A (Device A) and a device B (Device B), separately access different services. For step 302 and step 303, a scenario is as follows: As shown in the figure, if a service requested by the device A is corresponding to a routed WAN port, the residential gateway assigns a private IP address to the device A, and the device A accesses the residential gateway based on the IP address. The residential gateway queries a local routing table, and selects a corresponding routed WAN port based on source IP policy-based routing; and the device A is connected to the broadband access server by using the routed WAN port. Certainly, the device A (Device A) and the device B (Device A) may be a same device that supports different services.

For step 302 and step 303, another scenario is as follows: As shown in FIG. 4A and FIG. 4B, if a service requested by the device B is corresponding to a bridged WAN port, the residential gateway forwards the DHCP discover packet from the bridged WAN port to the broadband access server, and the residential gateway receives a DHCP Offer response packet returned by the broadband access server, and records a binding relationship between a source MAC address of the device B and a bridged WAN port. The residential gateway finds a corresponding LAN port based on the binding relationship between the source MAC address of the device B and the bridged WAN port, and sends the DHCP Offer response packet to the device B by using the corresponding LAN port. The residential gateway receives a DHCP request packet sent by the LAN-side device, and the residential gateway finds a corresponding bridged WAN port based on the binding relationship between the source MAC address of the device B and the bridged WAN port. Further, the residential gateway sends the DHCP request packet to the broadband access server by using the bridged WAN port, and then receives a DHCP acknowledgement packet returned by the broadband access server. The residential gateway sends the DHCP acknowledgement packet to the device B by using the LAN port. The device B checks whether a public IP address assigned by a DHCP server can be used; and if the public IP address can be used, the device B is connected to the broadband access server based on the public IP address by using the corresponding bridged WAN port.

In this embodiment of the present invention, the DHCP Option field is used to determine whether the LAN-side device is to be connected to a routed WAN port or a bridged WAN port, so that the residential gateway can flexibly select a routed WAN port or a bridged WAN port, to flexibly perform service deployment.

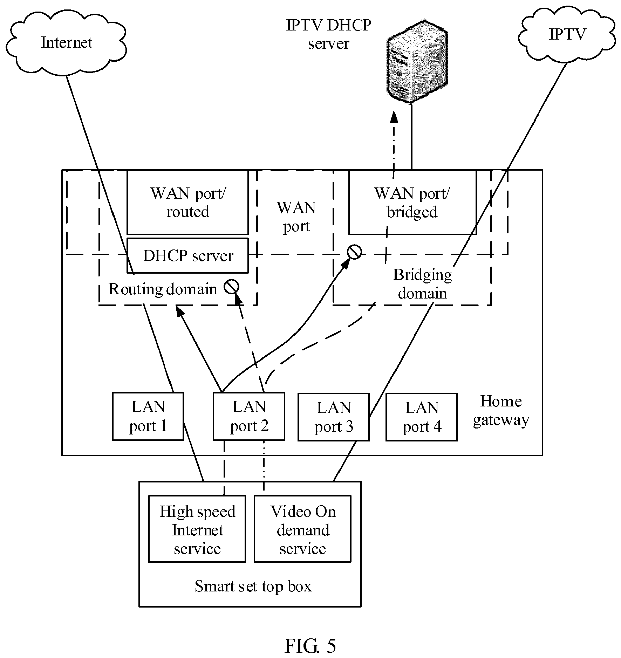

With reference to FIG. 4, the following provides description by using an example, in FIG. 5, in which a smart set-top box (Set-Top Box, STB) deploys a service by using a residential gateway. As shown in FIG. 5, the smart set top box is connected to the residential gateway by using a LAN port 2, and the smart set top box (STB) broadcasts a DHCP discover packet to the residential gateway. A case is as follows: If the DHCP discover packet carries a specific DHCP Option 60 string such as "STB", the residential gateway searches a service relational database corresponding to different values of strings, to learn that "STB" represents a Video On Demand service, and the residential gateway selects a routed WAN port based on a correspondence between a Video On Demand service and a routed WAN port or a bridged WAN port. Further, the residential gateway assigns a private IP address to a device A, and the device A accesses the residential gateway based on the IP address. The residential gateway queries a local routing table, and selects a corresponding routed WAN port based on source IP policy-based routing; and the device A is connected to a broadband access server by using the routed WAN port.

Another case is as follows: If the DHCP discover packet carries a specific DHCP Option 60 string such as "VoIP", the residential gateway searches a service relational database corresponding to different values of strings, to learn that "VoIP" represents a VoIP service, and the residential gateway selects a bridged WAN port based on a correspondence between a VoIP service and a routed WAN port or a bridged WAN port. Further, the residential gateway forwards the DHCP discover packet from the bridged WAN port to a broadband access server, and the residential gateway receives a DHCP Offer response packet returned by the broadband access server, and records a binding relationship between a source MAC address of a device B and a bridged WAN port. The residential gateway finds a corresponding LAN port based on the binding relationship between the source MAC address of the device B and the bridged WAN port, and sends the DHCP Offer response packet to the device B by using the corresponding LAN port. The residential gateway receives a DHCP request packet sent by the LAN-side device, and the residential gateway finds a corresponding bridged WAN port based on the binding relationship between the source MAC address of the device B and the bridged WAN port. Further, the residential gateway sends the DHCP request packet to the broadband access server by using the WAN port, and then receives a DHCP acknowledgement packet returned by the broadband access server. The residential gateway sends the DHCP acknowledgement packet to the device B by using the LAN port. The device B checks whether a public IP address assigned by a DHCP server can be used; and if the public IP address can be used, the device B is connected to the broadband access server based on the public IP address by using the corresponding bridged WAN port.

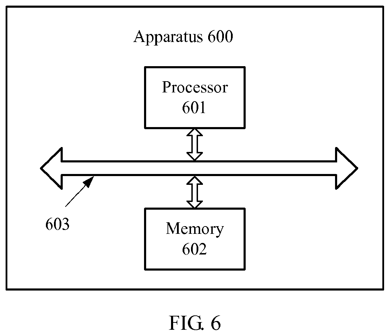

As shown in FIG. 6, the present invention further discloses a communications apparatus, including a processor 601, a memory 602, and a bus system 603. The processor 601 and the memory 602 are connected to each other by using the bus system 603, the memory 602 is configured to store an instruction, and the processor is configured to execute the instruction stored in the memory 602.

The processor 601 is configured to: receive a DHCP discover packet that includes a service request and that is sent by a LAN-side device, where the DHCP discover packet includes a DHCP Option field, the DHCP Option field includes a value, and the value identifies a requested service; select a corresponding routed WAN port or bridged WAN port based on a correspondence between the service identified by the value and a routed WAN port or a bridged WAN port; and establish a link to a broadband access server by using the selected routed WAN port or bridged WAN port.

A scenario is as follows: If the service identified by the value is corresponding to a bridged WAN port, the processor forwards the DHCP discover (DHCP discover) packet from the bridged WAN port to the broadband access server, and the residential gateway receives a DHCP Offer response packet returned by the broadband access server, and records a binding relationship between a source MAC address of the LAN-side device and a bridged WAN port. The residential gateway finds a corresponding LAN port based on the binding relationship between the source MAC address of the LAN-side device and the bridged WAN port, and sends the DHCP Offer response packet to the LAN-side device by using the LAN port. The residential gateway receives a DHCP request (DHCP request) packet sent by the LAN-side device, and the residential gateway finds a corresponding bridged WAN port based on the binding relationship between the source MAC address of the LAN-side device and the bridged WAN port. Further, the processor sends the DHCP request packet to the broadband access server by using the bridged WAN port, and receives a DHCP acknowledgement (DHCP ack) packet returned by the broadband access server. The residential gateway sends the DHCP acknowledgement packet to the LAN-side device by using the LAN port. If the LAN-side device determines, through check, that a public IP address assigned by a DHCP server (DHCP server) can be used, the LAN-side device is connected to the broadband access server based on the public IP address by using the corresponding bridged WAN port.

Another scenario is as follows: If the service identified by the value of the DHCP Option field is corresponding to a routed WAN port, the processor assigns a private IP address to the LAN-side device, and the LAN-side device accesses the residential gateway based on the IP address. Then, the processor queries a local routing table, and selects a corresponding routed WAN port based on source IP policy-based routing; and the LAN-side device is connected to the broadband access server by using the corresponding routed WAN port.

In this embodiment of the present invention, the DHCP Option field is used to determine whether the LAN-side device is to be connected to a routed WAN port or a bridged WAN port, so that the residential gateway can flexibly select a routed WAN port or a bridged WAN port, for flexible service deployment.

For brevity and ease of description, for a detailed working process of the foregoing system, apparatus, and unit, reference may be made to a corresponding process in the foregoing method embodiments. Details are not described herein again.

## Claims

1. A service forwarding method performed by a residential gateway, comprising:
receiving(301) a DHCP discover packet that comprises a service request and that is sent by a LAN-side device, wherein the DHCP discover packet comprises a DHCP Option field, the DHCP Option field comprises a first value, and the first value identifies a requested service;
if the service identified by the value is corresponding to a bridged WAN port, forwarding, by the residential gateway, the DHCP discover packet from the bridged WAN port to a broadband access server, , receiving, by the residential gateway, a DHCP Offer response packet returned by the broadband access server, and recording a binding relationship between a source MAC address of the LAN-side device and the bridged WAN port;
determining, by the residential gateway, a corresponding LAN port based on the binding relationship between the source MAC address of the LAN-side device and the bridged WAN port, and sending the DHCP Offer response packet to the LAN-side device by using the LAN port; and
receiving, by the residential gateway, a DHCP request packet sent by the LAN-side device, and finding, by the residential gateway, the bridged WAN port based on the binding relationship between the source MAC address of the LAN-side device and the bridged WAN port; and
establishing (303) a link to the broadband access server by using the bridged WAN port;
wherein establishing (303) a link to the broadband access server by using the bridged WAN port comprises,
sending the DHCP request packet to the broadband access server by using the bridged WAN port, and receiving a DHCP acknowledgement packet returned by the broadband access server; and
sending, by the residential gateway, the DHCP acknowledgement packet to the LAN-side device by using the LAN port, wherein the DHCP acknowledgement packet comprises a public IP address, which is assigned by a DHCP server to the LAN-side device.

2. The method according to claim 1, wherein the establishing a link to the broadband access server by using the bridged WAN port further comprises:
if the LAN-side device determines, through check, that the public IP address can be used, connecting, by the LAN-side device, to the broadband access server based on the public IP address by using the bridged WAN port.

3. The method according to claim 1, further comprising: receiving another DHCP discover packet which comprises a second value identifies a requested service;
if the service identified by the second value is corresponding to a routed WAN port, assigning, by the residential gateway, a private IP address to the LAN-side device, and accessing, by the LAN-side device, the residential gateway based on the IP address; and
establishing a link to the broadband access server by using a selected routed WAN port.

4. The method according to claim 3, wherein the establishing a link to the broadband access server by using a selected routed WAN port comprises:
querying, by the residential gateway, a local routing table, and selecting a routed WAN port based on source IP policy-based routing; and connecting, by the LAN-side device, to the broadband access server by using the selected routed WAN port.

5. The method according to any one of claims 1 to 4, wherein the value of the DHCP Option field is a value of a DHCP Option 60 field.

6. A residential gateway, comprising a LAN port, a routed WAN port, a DHCP server, and a bridged WAN port, wherein a LAN-side device is connected to the residential gateway by using the LAN port; and the residential gateway comprises means configured to carry out the following steps:
receiving a DHCP discover packet that comprises a service request and that is sent by the LAN-side device, wherein the DHCP discover packet comprises a DHCP Option field, the DHCP Option field comprises a first value, and the first value identifies a requested service;
if the service identified by the value is corresponding to the bridged WAN port, forwarding the DHCP discover packet from the bridged WAN port to a broadband access server, receiving a DHCP Offer response packet returned by the broadband access server, and recording a binding relationship between a source MAC address of the LAN-side device and the bridged WAN port;
determining the LAN port based on the binding relationship between the source MAC address of the LAN-side device and the bridged WAN port, sending the DHCP Offer response packet to the LAN-side device by using the LAN port;
receiving a DHCP request packet sent by the LAN-side device, and determining the bridged WAN port based on the binding relationship between the source MAC address of the LAN-side device and the bridged WAN port;
sending the DHCP request packet to the broadband access server by using the bridged WAN port;
receiving a DHCP acknowledgement packet returned by the broadband access server; and
sending, by the residential gateway, the DHCP acknowledgement packet to the LAN-side device by using the LAN port, wherein the DHCP acknowledgement packet comprises a public IP address, which is assigned by a DHCP server to the LAN-side device.

7. The residential gateway according to claim 6, wherein the residential gateway comprises means further configured to connect the LAN-side device to the broadband access server based on the public IP address by using the bridged WAN port, if the public IP address is checked by the LAN side device that the public IP address can be used.

8. The residential gateway according to claim 6 or 7, wherein the residential gateway 2. comprises means further configured to carry out the following steps:
receiving another DHCP discover packet which comprises a second value identifies a requested service;
assigning a private IP address to the LAN-side device, if the service identified by the second value is corresponding to a routed WAN port, wherein the IP address is used by the LAN-side device to access the residential gateway; and
establishing a link to the broadband access server by using a selected routed WAN port.

9. The residential gateway according to claim 8, wherein the residential gateway comprises means further configured to query a local routing table, select a routed WAN port based on source IP policy-based routing, and connect the LAN-side device to the broadband access server by using the corresponding routed WAN port.

10. The residential gateway according to any one of claims 6 to 9, wherein the value of the DHCP Option field is a value of a DHCP Option 60 field.

## Patentansprüche

1. Dienstweiterleitungsverfahren, das von einem "Residential Gateway" durchgeführt wird, umfassend:
Empfangen (301) eines DHCP-Ermittlungspakets, das eine Dienstanforderung umfasst und das von einer LAN-seitigen Vorrichtung gesendet wird, wobei das DHCP-Ermittlungspaket ein DHCP-Optionsfeld umfasst, das DHCP-Optionsfeld einen ersten Wert umfasst und der erste Wert einen angeforderten Dienst identifiziert;
wenn der durch den Wert identifizierte Dienst einem überbrückten WAN-Port entspricht, Weiterleiten des DHCP-Ermittlungspakets von dem überbrückten WAN-Port zu einem Breitbandzugriffsserver durch das "Residential Gateway", Empfangen eines DHCP-Angebotsantwortpakets, das von dem Breitbandzugriffsserver zurückgegeben wird, durch das "Residential Gateway" und Aufzeichnen einer Bindungsbeziehung zwischen einer Quellen-MAC-Adresse der LAN-seitigen Vorrichtung und dem überbrückten WAN-Port;
Bestimmen, durch das "Residential Gateway", eines entsprechenden LAN-Ports basierend auf der Bindungsbeziehung zwischen der Quellen-MAC-Adresse der LAN-seitigen Vorrichtung und dem überbrückten WAN-Port, und Senden des DHCP-Angebotsantwortpakets an die LAN-seitige Vorrichtung unter Verwendung des LAN-Ports; und
Empfangen eines von der LAN-seitigen Vorrichtung gesendeten DHCP-Anforderungspakets durch das "Residential Gateway" und Auffinden des überbrückten WAN-Ports durch das "Residential Gateway" basierend auf der Bindungsbeziehung zwischen der Quellen-MAC-Adresse der LAN-seitigen Vorrichtung und dem überbrückten WAN-Port; und
Einrichten (303) eines Links zum Breitbandzugriffsserver unter Verwendung des überbrückten WAN-Ports;
wobei das Einrichten (303) eines Links zum Breitbandzugriffsserver unter Verwendung des überbrückten WAN-Ports umfasst,
Senden des DHCP-Anforderungspakets an den Breitbandzugriffsserver unter Verwendung des überbrückten WAN-Ports und Empfangen eines DHCP-Bestätigungspakets, das von dem Breitbandzugriffsserver zurückgegeben wird; und Senden des DHCP-Bestätigungspakets an die LAN-seitige Vorrichtung durch das "Residential Gateway" unter Verwendung des LAN-Ports, wobei das DHCP-Bestätigungspaket eine öffentliche IP-Adresse umfasst, die von einem DHCP-Server der LAN-seitigen Vorrichtung zugewiesen wird.

2. Verfahren nach Anspruch 1, wobei das Einrichten eines Links zum Breitbandzugriffsserver unter Verwendung des überbrückten WAN-Ports ferner umfasst:
wenn die LAN-seitige Vorrichtung durch Überprüfen bestimmt, dass die öffentliche IP-Adresse verwendet werden kann, Verbinden, durch die LAN-seitige Vorrichtung, mit dem Breitbandzugriffsserver basierend auf der öffentlichen IP-Adresse unter Verwendung des überbrückten WAN-Ports.

3. Verfahren nach Anspruch 1, ferner umfassend: Empfangen eines weiteren DHCP-Ermittlungspakets, das einen zweiten Wert umfasst, der einen angeforderten Dienst identifiziert;
wenn der durch den zweiten Wert identifizierte Dienst einem gerouteten WAN-Port entspricht, Zuweisen einer privaten IP-Adresse an die LAN-seitige Vorrichtung durch das "Residential Gateway" und Zugreifen auf das "Residential Gateway" basierend auf der IP-Adresse durch die LAN-seitige Vorrichtung; und
Einrichten eines Links zum Breitbandzugriffsserver unter Verwendung eines ausgewählten gerouteten WAN-Ports.

4. Verfahren nach Anspruch 3, wobei das Einrichten eines Links zum Breitbandzugriffsserver unter Verwendung eines ausgewählten gerouteten WAN-Ports umfasst:
Abfragen einer lokalen Routing-Tabelle durch das "Residential Gateway" und Auswählen eines gerouteten WAN-Ports basierend auf Quellen-IP-Policy-basiertem Routing; und Verbinden durch die LAN-seitige Vorrichtung mit dem Breitbandzugriffsserver unter Verwendung des ausgewählten gerouteten WAN-Ports.

5. Verfahren nach einem der Ansprüche 1 bis 4, wobei der Wert des DHCP-Optionsfeldes ein Wert eines DHCP-Optionsfeldes 60 ist.

6. "Residential Gateway", umfassend einen LAN-Port, einen gerouteten WAN-Port, einen DHCP-Server und einen überbrückten WAN-Port, wobei eine LAN-seitige Vorrichtung unter Verwendung des LAN-Ports mit dem "Residential Gateway" verbunden ist; und das "Residential Gateway" Mittel umfasst, die dazu konfiguriert sind, die folgenden Schritte durchzuführen:
Empfangen eines DHCP-Ermittlungspakets, das eine Dienstanforderung umfasst und das von der LAN-seitigen Vorrichtung gesendet wird, wobei das DHCP-Ermittlungspaket ein DHCP-Optionsfeld umfasst, das DHCP-Optionsfeld einen ersten Wert umfasst und der erste Wert einen angeforderten Dienst identifiziert;
wenn der durch den Wert identifizierte Dienst dem überbrückten WAN-Port entspricht, Weiterleiten des DHCP-Ermittlungspakets von dem überbrückten WAN-Port zu einem Breitbandzugriffsserver, Empfangen eines DHCP-Angebotsantwortpakets, das von dem Breitbandzugriffsserver zurückgegeben wird, und Aufzeichnen einer Bindungsbeziehung zwischen einer Quellen-MAC-Adresse der LAN-seitigen Vorrichtung und dem überbrückten WAN-Port;
Bestimmen des LAN-Ports basierend auf der Bindungsbeziehung zwischen der Quellen-MAC-Adresse der LAN-seitigen Vorrichtung und dem überbrückten WAN-Port, Senden des DHCP-Angebotsantwortpakets an die LAN-seitige Vorrichtung unter Verwendung des LAN-Ports;
Empfangen eines von der LAN-seitigen Vorrichtung gesendeten DHCP-Anforderungspakets, und Bestimmen des überbrückten WAN-Ports basierend auf der Bindungsbeziehung zwischen der Quellen-MAC-Adresse der LAN-seitigen Vorrichtung und dem überbrückten WAN-Port;
Senden des DHCP-Anforderungspakets an den Breitbandzugriffsserver unter Verwendung des überbrückten WAN-Ports;
Empfangen eines vom Breitbandzugriffsserver zurückgegebenen DHCP-Bestätigungspakets; und
Senden des DHCP-Bestätigungspakets an die LAN-seitige Vorrichtung durch das "Residential Gateway" unter Verwendung des LAN-Ports, wobei das DHCP-Bestätigungspaket eine öffentliche IP-Adresse umfasst, die von einem DHCP-Server der LAN-seitigen Vorrichtung zugewiesen wird.

7. "Residential Gateway" nach Anspruch 6, wobei das "Residential Gateway" Mittel umfasst, die ferner dazu konfiguriert sind, die LAN-seitige Vorrichtung mit dem Breitbandzugriffsserver basierend auf der öffentlichen IP-Adresse unter Verwendung des überbrückten WAN-Ports zu verbinden, wenn die öffentliche IP-Adresse von der LAN-seitigen Vorrichtung überprüft wird, dass die öffentliche IP-Adresse verwendet werden kann.

8. "Residential Gateway" nach Anspruch 6 oder 7, wobei das "Residential Gateway" Mittel umfasst, die ferner dazu konfiguriert sind, die folgenden Schritte durchzuführen:
Empfangen eines weiteren DHCP-Ermittlungspakets, das einen zweiten Wert umfasst, der einen angeforderten Dienst identifiziert;
Zuweisen einer privaten IP-Adresse an die LAN-seitige Vorrichtung, wenn der durch den zweiten Wert identifizierte Dienst einem gerouteten WAN-Port entspricht, wobei die IP-Adresse von der LAN-seitigen Vorrichtung verwendet wird, um auf das "Residential Gateway" zuzugreifen; und
Einrichten eines Links zum Breitbandzugriffsserver unter Verwendung eines ausgewählten gerouteten WAN-Ports.

9. "Residential Gateway" nach Anspruch 8, wobei das "Residential Gateway" Mittel umfasst, die ferner dazu konfiguriert sind, eine lokale Routing-Tabelle abzufragen, einen gerouteten WAN-Port basierend auf Quellen-IP-Policy-basiertem Routing auszuwählen und die LAN-seitige Vorrichtung unter Verwendung des entsprechenden gerouteten WAN-Ports mit dem Breitbandzugriffsserver zu verbinden.

10. "Residential Gateway" nach einem der Ansprüche 6 bis 9, wobei der Wert des DHCP-Optionsfeldes ein Wert eines DHCP-Optionsfeldes 60 ist.

## Revendications

1. Procédé de transfert de service exécuté par une passerelle résidentielle, comprenant les étapes consistant à :
recevoir (301) un paquet de découverte DHCP qui comprend une demande de service et qui est envoyé par un dispositif côté réseau local, dans lequel le paquet de découverte DHCP comprend un champ Option DHCP, le champ Option DHCP comprend une première valeur, et la première valeur identifie un service demandé ;
si le service identifié par la valeur correspond à un port WAN ponté, transférer, par la passerelle résidentielle, le paquet de découverte DHCP du port WAN ponté à un serveur d'accès à large bande, recevoir, par la passerelle résidentielle, un paquet de réponse Offre DHCP renvoyé par le serveur d'accès à large bande, et enregistrer une relation de liaison entre une adresse MAC source du dispositif côté LAN et le port WAN ponté ;
déterminer, par la passerelle résidentielle, un port LAN correspondant sur la base de la relation de liaison entre l'adresse MAC source du dispositif côté LAN et le port WAN ponté, et envoyer le paquet de réponse Offre DHCP au dispositif côté LAN en utilisant le port LAN ; et
recevoir, par la passerelle résidentielle, un paquet de demande DHCP envoyé par le dispositif côté LAN, et rechercher, par la passerelle résidentielle, le port WAN ponté sur la base de la relation de liaison entre l'adresse MAC source du dispositif côté LAN et le port WAN ponté ; et
établir (303) une liaison avec le serveur d'accès à large bande en utilisant le port WAN ponté ;
dans lequel l'établissement (303) d'une liaison avec le serveur d'accès à large bande en utilisant le port WAN ponté comprend les étapes consistant à :
envoyer le paquet de demande DHCP au serveur d'accès à large bande en utilisant le port WAN ponté, et recevoir un paquet d'accusé de réception DHCP renvoyé par le serveur d'accès à large bande ; et
envoyer, par la passerelle résidentielle, le paquet d'accusé de réception DHCP au dispositif côté LAN en utilisant le port LAN, dans lequel le paquet d'accusé de réception DHCP comprend une adresse IP publique, qui est attribuée par un serveur DHCP au dispositif côté LAN.

2. Procédé selon la revendication 1, dans lequel l'établissement d'une liaison avec le serveur d'accès à large bande en utilisant le port WAN ponté comprend en outre l'étape consistant à :
si le dispositif côté LAN détermine, par vérification, que l'adresse IP publique peut être utilisée, se connecter, par le dispositif côté LAN, au serveur d'accès à large bande sur la base de l'adresse IP publique en utilisant le port WAN ponté.

3. Procédé selon la revendication 1, comprenant en outre les étapes consistant à : recevoir un autre paquet de découverte DHCP qui comprend une seconde valeur qui identifie un service demandé ;
si le service identifié par la seconde valeur correspond à un port WAN routé, attribuer, par la passerelle résidentielle, une adresse IP privée au dispositif côté LAN, et accéder, par le dispositif côté LAN, à la passerelle résidentielle sur la base de l'adresse IP ; et établir une liaison avec le serveur d'accès à large bande en utilisant un port WAN routé sélectionné.

4. Procédé selon la revendication 3, dans lequel l'établissement d'une liaison avec le serveur d'accès à large bande en utilisant un port WAN routé sélectionné comprend les étapes consistant à :
interroger, par la passerelle résidentielle, une table de routage locale, et sélectionner un port WAN routé sur la base d'un routage basé sur une politique d'IP source ; et se connecter, par le dispositif côté LAN, au serveur d'accès à large bande en utilisant le port WAN routé sélectionné.

5. Procédé selon l'une quelconque des revendications 1 à 4, dans lequel la valeur du champ Option DHCP est une valeur d'un champ Option DHCP 60.

6. Passerelle résidentielle, comprenant un port LAN, un port WAN routé, un serveur DHCP, et un port WAN ponté, dans laquelle un dispositif côté LAN est connecté à la passerelle résidentielle en utilisant le port LAN ; et la passerelle résidentielle comprend des moyens configurés pour exécuter les étapes suivantes :
recevoir un paquet de découverte DHCP qui comprend une demande de service et qui est envoyé par le dispositif côté LAN, dans lequel le paquet de découverte DHCP comprend un champ Option DHCP, le champ Option DHCP comprend une première valeur, et la première valeur identifie un service demandé ;
si le service identifié par la valeur correspond au port WAN ponté, transférer le paquet de découverte DHCP du port WAN ponté à un serveur d'accès à large bande, recevoir un paquet de réponse Offre DHCP renvoyé par le serveur d'accès à large bande, et enregistrer une relation de liaison entre une adresse MAC source du dispositif côté LAN et le port WAN ponté ;
déterminer le port LAN sur la base de la relation de liaison entre l'adresse MAC source du dispositif côté LAN et le port WAN ponté, envoyer le paquet de réponse Offre DHCP au dispositif côté LAN en utilisant le port LAN ;
recevoir un paquet de demande DHCP envoyé par le dispositif côté LAN, et déterminer le port WAN ponté sur la base de la relation de liaison entre l'adresse MAC source du dispositif côté LAN et le port WAN ponté ;
envoyer le paquet de demande DHCP au serveur d'accès à large bande en utilisant le port WAN ponté ;
recevoir un paquet d'accusé de réception DHCP renvoyé par le serveur d'accès à large bande ; et
envoyer, par la passerelle résidentielle, le paquet d'accusé de réception DHCP au dispositif côté LAN en utilisant le port LAN, dans lequel le paquet d'accusé de réception DHCP comprend une adresse IP publique, qui est attribuée par un serveur DHCP au dispositif côté LAN.

7. Passerelle résidentielle selon la revendication 6, dans laquelle la passerelle résidentielle comprend des moyens configurés en outre pour connecter le dispositif côté LAN au serveur d'accès à large bande sur la base de l'adresse IP publique en utilisant le port WAN ponté, si la vérification de l'adresse IP publique par le dispositif côté LAN indique que l'adresse IP publique peut être utilisée.

8. Passerelle résidentielle selon la revendication 6 ou 7, dans laquelle la passerelle résidentielle comprend des moyens configurés en outre pour exécuter les étapes suivantes :
recevoir un autre paquet de découverte DHCP qui comprend une seconde valeur qui identifie un service demandé ;
attribuer une adresse IP privée au dispositif côté LAN, si le service identifié par la seconde valeur correspond à un port WAN routé, dans laquelle l'adresse IP est utilisée par le dispositif côté LAN pour accéder à la passerelle résidentielle ; et
établir une liaison avec le serveur d'accès à large bande en utilisant un port WAN routé sélectionné.

9. Passerelle résidentielle selon la revendication 8, dans laquelle la passerelle résidentielle comprend des moyens configurés en outre pour interroger une table de routage locale, sélectionner un port WAN routé sur la base d'un routage basé sur une politique d'IP source, et connecter le dispositif côté LAN au serveur d'accès à large bande en utilisant le port WAN routé correspondant.

10. Passerelle résidentielle selon l'une quelconque des revendications 6 à 9, dans laquelle la valeur du champ Option DHCP est une valeur d'un champ Option DHCP 60.
